# EUROPÄISCHE PATENTSCHRIFT

(11) **EP 0 920 675 B1**
(45) Veröffentlichungstag und Bekanntmachung des Hinweises auf die Patenterteilung: **23.07.2003**
(21) Anmeldenummer: 97941790.4
(22) Anmeldetag: 12.08.1997
(51) Int. Cl.: G06K 19/07

(54) **DATENVERARBEITUNGSSYSTEM, WELCHES EINEN KARTENFÖRMIGEN TRÄGER MIT ANZEIGE AUFWEIST**
DATA PROCESSING SYSTEM PRESENTING A CARD-SHAPED CARRIER WITH A DISPLAY
SYSTEME DE TRAITEMENT D'INFORMATIONS PRESENTANT UN SUPPORT EN FORME DE CARTE MUNI D'UN AFFICHAGE

(30) Priorität: 22.08.1996 DE 19633945
(43) Veröffentlichungstag der Anmeldung: 09.06.1999
(73) Patentinhaber: SIEMENS AKTIENGESELLSCHAFT, 80333 München (DE)
(72) Erfinder: WEICHHOLD, Peter, D-90574 Ro tal (DE)
(86) Internationale Anmeldenummer: DE9701717
(87) Internationale Veröffentlichungsnummer: WO98008187

(56) Entgegenhaltungen:
- EP-A- 0 347 897
- US-A- 4 746 787
- US-A- 5 530 235
- PATENT ABSTRACTS OF JAPAN vol. 017, no. 590 (P-1635), 27.Oktober 1993 & JP 05 174205 A (KOUFU NIPPON DENKI KK), 13.Juli 1993,

## Beschreibung

Datenverarbeitungssysteme können insbesondere kartenförmige Träger aufweisen, die über Schreib- / Lesegeräte an einen zusätzlichen, außerhalb des kartenförmigen Trägers liegenden, externen elektronischen Schaltkreis, wie beispielsweise ein Terminal oder einen Zentralrechner, anschließbar sind. Die kartenförmigen Träger können dabei insbesondere einen eigenen elektronischen Schaltkreis mit einer elektronischen Datenverarbeitungseinheit und einem elektronischen Speicher aufweisen. Derartige kartenförmige Träger sind insbesondere sogenannte Chipkarten, wie z.B. Telefonkarten oder Kreditkarten.

Nachteilig ist, daß nur mittels dem externen Schreib- / Lesegerät Daten aus dem elektronischen Speicher des kartenförmigen Trägers anzeigbar sind. Der kartenförmige Träger muß somit zunächst mit dem externen Schreib- / Lesegerät verbunden werden, damit Daten im Speicher des elektronischen Schaltkreises des kartenförmigen Trägers auslesbar und auf einer Anzeige des externen Schreib- / Lesegeräts ausgebbar sind. Beispielsweise sind die noch verbliebenen Telefoneinheiten auf einer Telefonkarte nur mittels der Anzeige des Telefons anzeigbar.

Aus dem Dokument DE 39 29 879 A1 ist eine Parkkarte für notrufgesicherte Parkhäuser oder Parkgelände bekannt. Die Parkkarte weist dabei insbesondere verschiedene Anzeigevorrichtungen auf, welche jeweils zur Anzeige von bestimmten Daten dienen. In der Parkkarte ist des weiteren eine Stromquelle eingebettet, welche beispielsweise in Form von Batterien, Akkus oder Solarzellen vorliegt. Aus dem Dokument DE 38 04 618 A1 ist eine programmierbare Chipkarte mit einem LC-Display, einem Mikroprozessor als Zentraleinheit, einem Nur-Lese-Speicher als Programmspeicher, einem weiteren Nur-Lese-Speicher als weiteren Datenspeicher und einem Schreib-Lese-Speicher bekannt. Eine zentrale Spannungsversorgung mittels Solarzellen dient zur Spannungsversorgung aller elektronischen Baueinheiten der Chipkarte.

Aus dem Dokument DE 41 20 265 A1 ist eine Karte bekannt, wobei über Datenübertragungs- und Empfangseinrichtungen eine kontaktlose Datenübertragung mittels einer Resonanzschaltung bewirkt wird.

Aus der JP-A-05 174205 und der US-A-4,746,787 sind Chipkarten bekannt. Diese enthalten einen Speicher, dessen Inhalte mit Hilfe eines auf der Chipkarte befindlichen Prozessors auf einer Anzeigeeinheit ausgegeben werden können.

Aufgabe der Erfindung ist es, ein Datenverarbeitungssystem mit einer verbesserten Möglichkeit zur Datenausgabe auf der Anzeige eines kartenförmigen Trägers anzugeben.

Die Aufgabe wird mit einem Datenverarbeitungssystem gemäß Auspruch 1 gelöst.

Vorteil der Erfindung ist es, daß mittels dem erfindungsgemäßen Datenverarbeitungssystem benutzerspezifische Daten aus dem elektronischen Speicher des kartenförmigen Trägers auf der dort angebrachten Anzeige ausgebbar sind.

Der Anzeigevorgang erfolgt dabei ohne weitere Hilfsmittel direkt auf dem kartenförmigen Träger. Die Anzeige des karcenförmigen Trägers ist bequem durch dessen Benutzer ablesbar, ohne daß andere Personen die angezeigcen Daten mitlesen könnten. Insbesondere bei persönlichen Daten, wie beispielsweise der Kontostand auf einer elektronischen kartenförmigen Geldbörse, besteht das Interesse einer hohen Diskretion beim Ablesen von Informationen von der Anzeige.

Besonders vorteilhaft ist es, daß die für einen Anzeigevorgang notwendige Zwischenspeicherung der zur Anzeige vorgesehenen Daten im Speicher des kartenförmigen Trägers erfolgt. Die zur Anzeige vorgesehenen Daten sind dabei in einem bestimmten, als Anzeigespeicherbereich dienenden Speicherbereich von dessen Speicher gespeichert. Der Anzeigespeicherbereich ist somit physikalischer Bestandteil des elektronischen Speichers des Schaltkreises des kartenförmigen Trägers und unterscheidet sich für dessen Datenverarbeitungseinheit nur durch die Speicheradresse. Dadurch können vorteilhaft die in handelsüblichen elektronischen Schaltkreisen für kartenförmige Träger vorhandenen genormten Schreib-/Leseroutinen unverändert beibehalten werden.

Desweiteren ist die Anzeige direkt durch die Ansteuerelektronik mit den zur Anzeige vorgesehenen Daten im Anzeigespeicherbereich ansteuerbar. Dadurch ist die Anzahl der für den Anzeigevorgang erforderlichen elektronischen Komponenten auf dem kartenförmigen Träger vorteilhaft auf ein Minimum reduzierbar.

Bei einer weiteren Ausführungsform weist das Datenverarbeitungssystem desweiteren einen externen elektronischen Schaltkreis auf, welcher über eine elektronische Schnittstelle zur Daten- und Energieübertragung mit dem elektronischen Schaltkreis des kartenförmigen Trägers verbindbar ist.

Hiermit ist der weitere Vorteil verbunden, daß im externen elektronischen Schaltkreis, welcher beispielsweise in Form eines ortsfesten Schreib- / Lesegeräts vorliegt, keine externe Anzeige erforderlich ist. Ein Benutzer des kartenförmigen Trägers des erfindungsgemäßen Datenverarbeitungssystems kann somit bequem benutzerspezifische Daten auf der Anzeige des kartenförmigen Trägers ablesen, ohne sich dem Schreib- / Lesegerät selbst zuwenden zu brauchen. Dies ist besonders von Vorteil, da ein einziges Schreib- / Lesegerät somit gleichzeitig für eine größere Anzahl von Benutzern kartenförmiger Träger verwendbar ist.

Bei einer weiteren Ausführungsform des erfindungsgemäßen Datenverarbeitungssystems weist der externe elektronische Schaltkreis eine externe Datenverarbeitungseinheit zur Bearbeitung eines externen Steuerprogramms auf, welches über die Datenverarbeitungseinheit des kartenförmigen Trägers auf dessen elektronischen Speicher zugreifen kann.

Hiermit ist der weitere Vorteil verbunden, daß bei dem erfindungsgemäßen Datenverarbeitungssystem die Bearbeitung der auf der Anzeige des kartenförmigen Trägers auszugebenden Daten durch den externen elektronischen Schaltkreis erfolgen kann. Dadurch ist es nicht erforderlich, spezielle Steuerprogrammroutinen in dem elektronischen Schaltkreis des kartenförmigen Trägers zur Datenausgabe auf der optischen Anzeige zu implementieren. Somit sind auf dem kartenförmigen Träger insbesondere handelsübliche integrierte elektronische Schaltkreise mit einem Mikroprozessor oder einem sogenannten "ASIC" verwendbar, die für kartenförmige Träger optimiert sind.

Vorteilhaft ist desweiteren die damit mögliche Verlagerung insbesondere der Rechenleistung von der Datenverarbeitungseinheit des kartenförmigen Trägers auf die in der Regel leistungsstärkere externe Datenverarbeitungseinheit des externen elektronischen Schaltkreises.

Ein weiterer Vorteil besteht darin, daß von dem externen elektronischen Schaltkreis nur mittels der Datenverarbeitungseinheit des kartenförmigen Trägers und dessen genormten Schreib-/Leseroutinen ein Zugriff auf den Speicher des kartenförmigen Trägers einschließlich dessen Anzeigespeicherbereichs erfolgen kann. Die externe elektronische Datenverarbeitungseinheit kann somit zwingend bestimmte interne Steuerroutinnen der Datenverarbeitüngseinheit des kartenförmigen Trägers benutzen müssen, um in dessen Speicher Schreibund/oder Lesefunktionen ausüben zu können. Dies ist von Vorteil, um insbesondere Schutz- und Sicherheitsfunktionen für Schreib- und Lesevorgänge auf dem kartenförmigen Träger zu implementieren. Beispielsweise bei kartenförmigen Trägern in Form von Scheck- oder Kreditkarten kann somit ein externer Zentralrechner nur über die auf dem kartenförmigen Träger implementierten Sicherheitsfunktionen einen Zugriff auf dessen Speicher vornehmen.

Bei einer weiteren Ausführungsform des erfindungsgemäßen Datenverarbeitungssystems sind durch das externe Steuerprogramm zur Anzeige vorgesehene Daten im Anzeigespeicherbereich des elektronischen Speichers des kartenförmigen Trägers speicherbar.

Hiermit ist der weitere Vorteil verbunden, daß die für eine Anzeige von Daten notwendige Datenverarbeitung ausschließlich im externen elektronischen Schaltkreis erfolgen kann. Durch diesen sind dabei Daten aus unterschiedlichen Speicherbereichen des Speichers des kartenförmigen Trägers einlesbar, verarbeitbar und im Anzeigespeicherbereich des Speichers des kartenförmigen Trägers in einem Format abspeicherbar, welches direkt von der Ansteuerelektronik der Anzeige lesbar ist. Die Steuerung der Anzeige ist somit vorteilhaft in dem externen elektronischen Schaltkreis durch eine Art "Fernsteuerung" vornehmbar.

Bei einer weiteren Ausführungsform des erfindungsgemäßen Datenverarbeitungssystems weist die elektronische Schnittstelle eine kontaktlose Übertragungsstrecke auf.

Hiermit ist der weitere Vorteil verbunden, daß ein Benutzer des kartenförmigen Trägers im Übertragungsbereich des externen elektronischen Schaltkreises bequem die Anzeige ablesen kann, ohne daß eine mechanisch-elektronische Verbindung zwischen dem kartenförmigen Träger und dem externen elektronischen Schaltkreis zu bestehen braucht. Der Benutzer kann somit den kartenförmigen Träger in der Hand haltend die Anzeige bequem und einfach ablesen.

Bei einer weiteren Ausführungsform des erfindungsgemäßen Datenverarbeitungssystems werden für den Fall, daß der kartenförmige Träger über die elektronische Schnittstelle mit dem externen elektronischen Schaltkreis verbunden ist, durch die Ansteuerelektronik zur Anzeige vorgesehene Daten automatisch aus dem Anzeigespeicherbereich des kartenförmigen Trägers gelesen und auf der Anzeige ausgegeben.

Hiermit ist der weitere Vorteil verbunden, daß der kartenförmige Träger bei Verbindung mit dem externen elektronischen Schaltkreis automatisch die von diesem übertragenen Anzeigeinformationen auf der Anzeige ausgibt. Insbesondere bei einer kontaktlosen Übertragungsstrecke sind somit im Übertragungsbereich des externen elektronischen Schaltkreises Daten zu Informationszwecken automatisch auf der Anzeige des kartenförmigen Trägers darstellbar, wie beispielsweise das Zeitguthaben bei einem Zeiterfassungssystem, der Kontostand bei einer elektrischen Geldbörse, Produktpreise in einem Kaufhaus oder Bildsequenzen zu Werbezwecken. So sind beispielsweise in einem Flughafengebäude Fluggäste über die Anzeige des kartenförmigen Trägers in Form einer "Fernanzeige" individuell zum richtigen Abfluggate leitbar und über die aktuellen Flugzeitplan informierbar.

Bei einer weiteren Ausführungsform des erfindungsgemäßen Datenverarbeitungssystems weist der kartenförmige Träger zusätzlich eine interne Energieversorgung auf, durch welche für den Fall, daß der kartenförmige Träger nicht über die elektronische Schnittstelle mit dem externen elektronischen Schaltkreis verbunden ist, der Anzeigespeicherbereich im elektronischen Speicher, die Ansteuerelektronik und die Anzeige separat mit elektrischer Spannung versorgbar sind.

Hiermit ist der weitere Vorteil verbunden, daß durch die interne Energieversorgung des kartenförmigen Trägers somit jederzeit eine autarke Anzeige von Daten möglich ist, welche unabhängig von einer externen Energieversorgung insbesondere durch den externen elektronischen Schaltkreis ist.

Besonders vorteilhaft ist es, daß bestimmte, zur Anzeige von Daten erforderliche Komponenten des kartenförmigen Trägers separat mit Energie versorgbar sind. Da die Speicherung der zur Anzeige vorgesehenen Daten im Anzeigespeicherbereich des kartenförmigen Trägers insbesondere ausschließlich von dem externen elektronischen Schaltkreis erfolgen kann, ist für die Anzeige dieser Daten auf dem kartenförmigen Träger nur die separate Energieversorgung des Anzeigespeicherbereichs und der Anzeige mit deren Ansteuerelektronik nötwendig. Aufgrund der reduzierbaren Anzahl der mit elektrischer Energie zu versorgenden Komponenten auf dem kartenförmigen Träger ist somit vorteilhaft eine energiesparende interne Energieversorgung mit einer geringen Leistungskapazität einsetzbar.

Bei einer weiteren Ausführungsform des erfindungsgemäßen Datenverarbeitungssystems weist die interne Energieversorgung des kartenförmigen Trägers wenigstens eine Solarzelle auf.

Hiermit ist der weitere Vorteil verbunden, daß sich die Solarzelle aufgrund der flachen Form besonders vorteilhaft an dem kartenförmigen Träger anbringen läßt. Insbesondere kann durch die vorteilhafte separate elektrische Spannungsversorgung der Anzeige, der Ansteuerelektronik und des Anzeigespeicherbereichs durch die interne Energieversorgung im kartenförmigen Träger auch eine Solarzelle kleiner Bauart verwendet werden.

Bei einer weiteren Ausführungsform des erfindungsgemäßen Datenverarbeitungssystems weist der kartenförmige Träger zusätzlich zur internen Energieversorgung ein Schaltelement auf, durch welches für den Fall, daß der kartenförmige Träger nicht über die elektronische Schnittstelle mit dem externen elektronischen Schaltkreis verbunden ist, zur Anzeige vorgesehene Daten mittels der Ansteuerelektronik gelesen und angezeigt werden.

Hiermit ist der weitere Vorteil verbunden, daß eine durch die interne Energieversorgung mögliche, autarke Ausgabe von Daten auf der Anzeige des kartenförmigen Trägers nur durch das zusätzliche Betätigen eines Schaltelements, wie beispielsweise ein Taster, erfolgen kann. Dies dient insbesondere der Datensicherheit für den Anzeigevorgang, da nur bei Bedarf Daten zur Anzeige kommen.

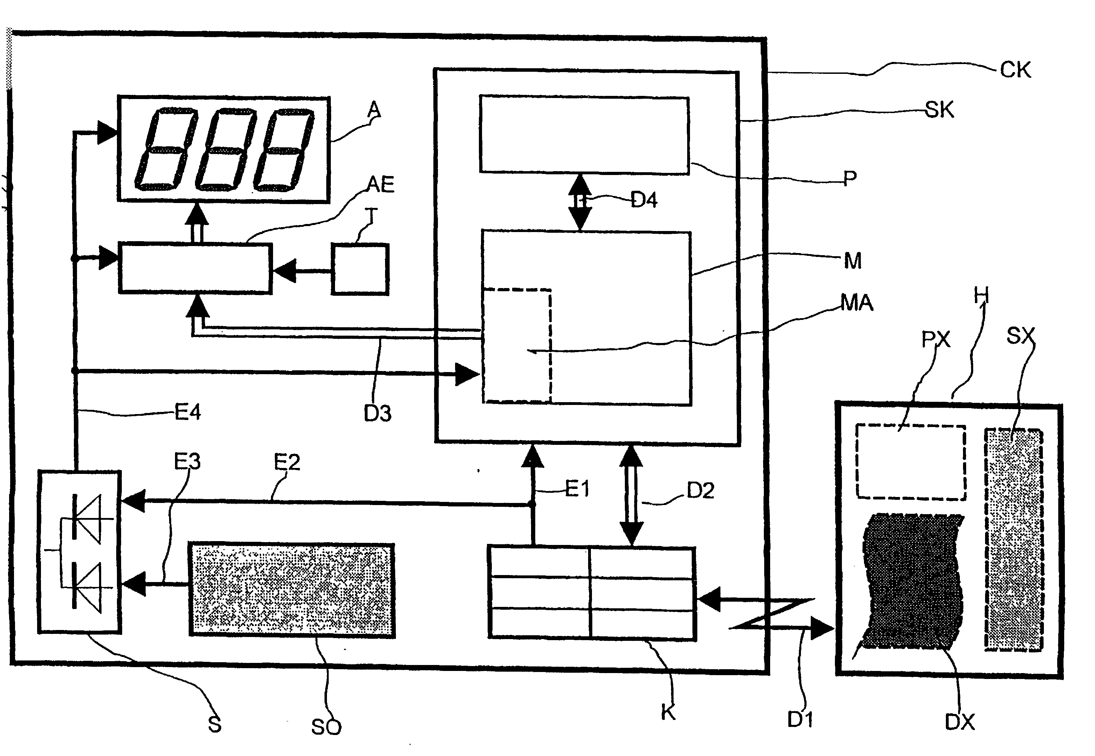

Die Erfindung wird desweiteren anhand des in der nachfolgend kurz angeführten Figur dargestellten Ausführungsbeispieles weiter erläutert. Dabei zeigt die Figur ein Datenverarbeitungssystem gemäß der Erfindung mit einem kartenförmigen Träger mit Anzeige, welcher über eine Schnittstelle mit einem externen elektronischen Schaltkreis verbindbar ist.

In der Figur ist ein erfindungsgemäßes Datenverarbeitungssystem mit einem kartenförmigen Träger CK dargestellt, welcher einen elektronischen Schaltkreis SK mit einer Datenverarbeitungseinheit P und zumindest einen elektronischen Speicher M mit einem Anzeigespeicherbereich MA zur Zwischenspeicherung von zur Anzeige vorgesehenen Daten aufweist. Die Datenverarbeitungseinheit P ist insbesondere eine fest verdrahtete Logik, wie beispielsweise ein sogenannter ASIC, oder ein Mikroprozessor. Die zur Anzeige vorgesehenen Daten sind dabei im Speicher M an bestimmten Speicheradressen gespeichert, welche den Anzeigespeicherbereich MA bilden. Der Anzeigespeicherbereich MA ist erfindungsgemäß physikalischer Bestandteil des elektronischen Speichers M des elektronischen Schaltkreises SK des kartenförmigen Trägers CK. Der Anzeigespeicherbereich MA belegt dabei einen bestimmten Adressierungsbereich des Speichers M.

Der kartenförmige Träger CK weist desweiteren erfindungsgemäß eine Anzeige A mit Ansteuerelektronik AE auf, mittels der zur Anzeige vorgesehene Daten aus dem Anzeigespeicherbereich MA des elektronischen Speichers M ausgebbar sind. Wie in der Figur durch den Pfeil D3 dargestellt ist, werden die zur Anzeige vorgesehenen Daten dabei von der Ansteuerelektronik AE aus dem Anzeigespeicherbereich MA gelesen und direkt auf Anzeige A dargestellt. Somit braucht die Ansteuerelektronik AE vorteilhaft keinen zusätzlichen Zwischenspeicher aufzuweisen. Die zur Anzeige vorgesehenen Daten sind dabei im Anzeigespeicherbereich MA vorteilhaft in einem Format gespeichert, welches eine unmittelbare Ansteuerung der Anzeige A durch die Ansteuerelektronik AE mit möglichst geringem elektronischen Aufwand ermöglicht.

Die Ansteuerelektronik AE kann beispielsweise eine zur elektronischen Ansteuerung von Anzeigen üblicherweise verwendete sogenannte "Multiplex-Schaltung" sein. Als Anzeige A eignet sich insbesondere eine Segmentanzeige oder eine aus einem Bitmuster zusammengesetzte Flüssigkristallanzeige. Beispielsweise ist bei einer aus einem Bitmuster zusammengesetzten Anzeige A jedem Bit im Anzeigespeicherbereich MA des Speichers M ein Punkt der Anzeige A zugeordnet. Somit sind insbesondere auch Bildinformationen darstellbar.

In einer vorteilhaften Ausführungsform des erfindungsgemäßen Datenverarbeitungssystem weist dieses einen externen elektronischen Schaltkreis H auf, welcher über eine elektronische Schnittstelle K zur Daten- und Energieübertragung mit dem kartenförmigen Träger CK verbindbar ist. Der externe elektronische Schaltkreis H ist dabei außerhalb des kartenförmigen Trägers CK und getrennt von diesem angeordnet und kann beispielsweise in Form eines ortsfesten, an ein Terminal oder einen Computer angeschlossenen Schreib- / Lesegerätes vorliegen. Die Daten- und Energieübertragung ist in der Figur durch eine Übertragungsstrecke D1, sowie mittels der Pfeile E1, E2 und E4 für die Energieübertragung und mit dem Pfeil D2 für die Datenübertragung dargestellt. Eine Energieübertragung über die Übertragungsstrecke D1 auf den kartenförmigen Träger CK kann durch eine externe Energieversorgung SX erfolgen, die nicht notwendigerweise, wie in der Figur dargestellt ist, Bestandteil des externen elektronischen Schaltkreises H zu sein braucht.

Die Übertragungsstrecke D1 der elektronischen Schnittstelle K zur Daten- und Energieübertragung kann insbesondere kontaktbehaftet oder kontaktlos sein. Ist die Übertragungsstrecke D1 kontaktbehaftet, so weist die Schnittstelle K beispielsweise ein Kontaktfeld auf. Ist die elektronische Übertragungsstrekke D1 kontaktlos, so kann die Schnittstelle K beispielsweise eine kontaktlose Sende- und Empfangseinrichtung aufweisen.

Desweiteren kann der externe elektronische Schaltkreis H eine externe Datenverarbeitungseinheit PX zur Bearbeitung eines externen Steuerprogramms DX aufweisen, welches über die Datenverarbeitungseinheit P des kartenförmigen Trägers CK auf dessen elektronischen Speicher M zugreifen kann. Der Zugriff über die Datenverarbeitungseinheit P auf den Speicher M ist in der Figur durch den Pfeil D4 symbolisiert. Beispielsweise bei einem Datenverarbeitungssystem in Form eines elektronischen Abbuchungssystems mit elektronischer Geldbörse, weist das externe Steuerprogramm DX insbesondere Programmroutinen auf, um von dem kartenförmigen Träger CK in Form der elektronischen Geldbörse Geldbeträge auf- oder abzubuchen. Insbesondere erfolgt ein lesender oder schreibender Zugriff der externen Datenverarbeitungseinheit PX ausschließlich über die Datenverarbeitungseinheit P im kartenförmigen Träger CK auf dessen Speicher M. Dadurch sind im elektronischen Schaltkreis SK des kartenförmigen Trägers CK möglicherweise vorhandene Sicherheitsroutinen vom externen elektronischen Schaltkreis H nicht umgehbar. Dies erhöht die Sicherheit gegen einen möglichen Mißbrauch des Datenverarbeitungssystems.

Insbesondere handelsübliche elektrische Schaltkreise für kartenförmige Träger weisen keine internen Funktionen zum Umspeichern von Daten innerhalb deren Speichers auf. Vorteilhaft sind somit nur mittels des externen elektronischen Schaltkreises H bestimmte, zur Ausgabe durch die Anzeige A vorbereitete Daten im Anzeigespeicherbereich MA des kartenförmigen Trägers CK speicherbar.

Erfindungsgemäß sind somit durch das externe Steuerprogramm DX zur Anzeige vorgesehene Daten ausschließlich im Anzeigespeicherbereich MA des elektronischen Speichers M des kartenförmigen Trägers CK speicherbar. Mögliche aufwendige Berechnungen zur Erstellung des für eine Anzeige notwendigen Formats von Daten sind somit außerhalb des elektronischen Schaltkreises SK des kartenförmigen Trägers CK im externen elektronischen Schaltkreis H vornehmbar. Hierzu können durch die Datenverarbeitungseinheit PX des externen elektronischen Schaltkreises H bestimmte Daten aus dem Speicher M des kartenförmigen Trägers CK ausgelesen, entsprechend verarbeitet und als anzuzeigende Daten im Anzeigespeicherbereich MA abgespeichert werden. Auch diese Lese- und Schreibvorgänge erfolgen über die Datenverarbeitungseinheit P des kartenförmigen Trägers CK, welche erfindungsgemäß nicht zwischen einer Speicheradressierung des Anzeigespeicherbereichs MA des Speichers M und der Speicheradressierung des restlichen Speicherbereichs des Speichers M unterscheiden. Diese erfindungsgemäße "Fernsteuerung" durch den externen elektronischen Schaltkreis H ist insbesondere dann von Vorteil, wenn die Datenverarbeitungseinheit P im kartenförmigen Träger CK nur eine geringe Leistungskapazität aufweist, nicht die nötigen Rechenoperationen ermöglicht oder in Form eines Mikroprozessors über einen beschränkten Befehlssatz verfügt. So sind vorteilhaft auf der Anzeige A des kartenförmigen Trägers CK beispielsweise Bildsequenzen ausgebbar, welche von dem externen elektronisehen Schaltkreis H in den Anzeigespeicherbereich MA des kartenförmigen Trägers CK eingespeist werden.

In einer weiteren vorteilhaften Ausführungsvariante des erfindungsgemäßen Datenverarbeitungssystem werden für den Fall, daß der kartenförmige Träger CK über die elektronische Schnittstelle K mit dem externen elektronischen Schaltkreis H verbunden ist, zur Anzeige vorgesehene Daten durch die Ansteuerelektronik AE automatisch aus dem Anzeigespeicherbereich MA des kartenförmigen Trägers CK gelesen und auf der Anzeige A ausgegeben. Beispielsweise bei einem erfindungsgemäßen Datenverarbeitungssystem in Form eines Zeiterfassungssystems erhalten die partizipierenden Personen einen kartenförmigen Träger CK gemäß der Erfindung in Form eines Firmenausweises mit Zeiterfassungskonto und Flüssigkristallanzeige. Dieser ist beispielsweise bei Passieren eines Drehkreuzes über eine kontaktlose Übertragungsstrecke D1 mit einem externen elektronischen Schaltkreis H in Form eines Zentralrechners verbunden. Durch den Zentralrechner ist die aktuelle Zeit erfaßbar, das entsprechend aktualisierte Zeitguthaben auf dem Firmenausweis speicherbar und mittels der Flüssigkristallanzeige auf dem Firmenausweis beim Passieren anzeigbar.

Besonders vorteilhaft weist der kartenförmige Träger CK des Datenverarbeitungssystems in einer weiteren Ausführungsvariante zusätzlich eine interne Energieversorgung SO auf, durch welche für den Fall, daß der kartenförmige Träger CK nicht über die elektronische Schnittstelle K mit dem externen elektronischen Schaltkreises H verbunden ist, der Anzeigespeicherbereich MA im elektronischen Speicher M, die Ansteuerelektronik AE und die Anzeige A separat mit elektrischer Spannung versorgbar sind. Die interne Energieversorgung SO ermöglicht insbesondere die autarke Ausgabe von zur Ausgabe vorgesehenen Daten im Anzeigespeicherbereich MA des kartenförmigen Trägers CK. Der kartenförmige Träger CK braucht dabei vorteilhaft nicht über die elektronische Schnittstelle K mit dem externen elektronischen Schaltkreis H verbunden sein. Ein Wechsel der Energieversorgung des kartenförmigen Trägers CK von der externen Energieversorgung SX auf die interne Energieversorgung SO erfolgt insbesondere durch eine Ablöseschaltung S, die beispielsweise eine Diodenschaltung aufweist. Die interne Energieversorgung SO kann dabei insbesondere wenigstens eine Solarzelle, eine Kapazität oder eine Batterie aufweisen.

Die interne Energieversorgung SO des kartenförmigen Trägers CK, wie beispielsweise eine Solarzelle, kann in der Regel nicht genügend Energie liefern, um vollständig den elektrischen Schaltkreis SK einschließlich Datenverarbeitungseinheit P und Speicher M, sowie desweiteren die Anzeige A und die Ansteuerelektronik AE zu betreiben. Vorteilhaft sind deshalb durch die interne Energieversorgung SO lediglich die Ansteuerelektronik AE, die Anzeige A und partiell der Anzeigespeicherbereich MA im elektronischen Speicher M mit Spannung versorgbar. Dies ist in der Figur durch die Pfeile E3 und E4 dargestellt. Insbesondere brauchen die Datenverarbeitungseinheit P des kartenförmigen Trägers CK und der Speicherbereich des Speichers M, welcher nicht den Anzeigespeicherbereich MA umfaßt, nicht durch die interne Energieversorgung SO mit Spannung versorgt werden. Bei Betrieb des kartenförmigen Trägers CK durch die interne Energieversorgung SO, ermöglicht diese jederzeit die Ausgabe der im Anzeigespeicherbereich MA befindlichen Daten.

In einer weiteren vorteilhaften Ausführungsvariante des Datenverarbeitungssystems weist der kartenförmige Träger CK zusätzlich zur internen Energieversorgung SO ein Schaltelement T auf, durch welches für den Fall, daß der kartenförmige Träger CK nicht über die elektronische Schnittstelle K mit dem externen elektronischen Schaltkreises H verbunden ist, zur Anzeige vorgesehene Daten mittels der Ansteuerelektronik AE gelesen und angezeigt werden.

## Patentansprüche

1. Datenverarbeitungssystem (CK, D1, H) auf einem kartenförmigen Träger (CK), welcher
a) einen elektronischen Schaltkreis (SK) mit einer Datenverarbeitungseinheit (P) und zumindest einen elektronischen Speicher (M) mit einem Anzeigespeicherbereich (MA) zur Zwischenspeicherung von zur Anzeige vorgesehenen Daten aufweist, wobei der Anzeigespeicherbereich physikalischer Bestandteil des elektronischen Speichers ist und sich für dessen Datenverarbeitungseinheit (P) nur durch die Speicheradresse unterscheidet, und
b) eine Anzeige (A) mit Ansteuerelektronik (AE) aufweist, wobei die Anzeige durch die Ansteuerelektronik direkt mit den zur Anzeige vorgesehenen Daten im Anzeigebereich ansteuerbar ist.

2. Datenverarbeitungssystem (CK, D1, H) nach Anspruch 1, wobei die Datenverarbeitungseinheit (P) insbesondere benutzerspezifische Daten in dem elektronischen Speicher (M) ablegt in einem Bereich, der nicht zur Zwischenspeicherung von zur Anzeige vorgesehenen Daten dienenden separaten Anzeigespeicherbereich (MA) dient.

3. Datenverarbeitungssystem (CK, D1, H) nach Anspruch 1 oder 2, wobei die zur Anzeige vorgesehene Daten im Anzeigespeicherbereich (MA) in einem Format gespeichert sind, welches eine unmittelbare Ansteuerung der Anzeige (A) durch die Ansteuerelektronik (AE) ermöglicht.

4. Datenverarbeitungssystem (CK, D1, H) nach einem der vorangegangenen Ansprüche, wobei der kartenförmige Träger (CK) zusätzlich eine interne Energieversorgung (SO) aufweist, durch welche der separate Anzeigespeicherbereich (MA) im elektronischen Speicher (M), die Ansteuerelektronik (AE) und die Anzeige (A) separat mit elektrischer Spannung (E3, E4) versorgbar sind.

5. Datenverarbeitungssystem (CK, D1, H) nach Anspruch 4, wobei die interne Energieversorgung (SO) des kartenförmigen Trägers (CK) wenigstens eine Solarzelle aufweist.

6. Datenverarbeitungssystem (CK, D1, H) nach einem der vorangegangenen Ansprüche, mit einem externen elektronischen Schaltkreis (H), welcher über eine elektronische Schnittstelle (K) zur Daten- und Energieübertragung (D1, D2, E1, E2) mit dem elektronischen Schaltkreis (SK) des kartenförmigen Trägers (CK) verbindbar ist.

7. Datenverarbeitungssystem (CK, D1 H) nach Anspruch 6, wobei der externe elektronische Schaltkreis (H) eine externe Datenverarbeitungseinheit (PX) zur Bearbeitung eines externen Steuerprogramms (DX) aufweist, welches über die Datenverarbeitungseinheit (P) des kartenförmigen Trägers (CK) auf dessen elektronischen Speicher (M) zugreifen kann.

8. Datenverarbeitungssystem (CK, D1, H) nach Anspruch 7, wobei durch das externe Steuerprogramm (DX) zur Anzeige vorgesehene Daten im Anzeigespeicherbereich (MA) des elektronischen Speichers (M) des kartenförmigen Trägers (CK) speicherbar sind.

9. Datenverarbeitungssystem (CK, D1, H) nach einem der Ansprüche 5 bis 7, wobei die elektronische Schnittstelle (K) eine kontaktlose Übertragungsstrecke (D1) aufweist.

10. Datenverarbeitungssystem (CK, D1, H) nach einem der Ansprüche 6 bis 9, wobei für den Fall, daß der kartenförmige Träger (CK) über die elektronische Schnittstelle (K) mit dem externen elektronischen Schaltkreis (H) verbunden ist, durch die Ansteuerelektronik (AE) zur Anzeige vorgesehene Daten automatisch aus dem Anzeigespeicherbereich (MA) des kartenförmigen Trägers (CK) gelesen und auf der Anzeige (A) ausgegeben werden.

11. Datenverarbeitungssystem (CK, D1, H) nach Anspruch 4 und einem der Ansprüche 5 bis 10, wobei der kartenförmige Träger (CK) ein Schaltelement (T) aufweist, durch welches für den Fall, daß der kartenförmige Träger (CK) nicht über die elektronische Schnittstelle (K) mit dem externen elektronischen Schaltkreis (H) verbunden ist, zur Anzeige vorgesehene Daten mittels der Ansteuerelektronik (AE) gelesen und angezeigt werden.

## Claims

1. Data-processing system (CK, D1, H) on a card-shaped medium (CK), which
a) has an electronic circuit (SK) with a data-processing unit (P) and at least one electronic memory (M) with a display buffer (MA) for temporary storage of data to be displayed, the display buffer being a physical component of the electronic memory, and for its data-processing unit (P) differentiated only by the memory address, and
b) a display (A) with control electronics (AE), which can directly control the display with the data to be displayed in the display buffer.

2. Data-processing system (CK, D1, H) according to Claim 1, the data-processing unit (P) in particular storing user-specific data in the electronic memory (M) in an area that is not used for temporary storage of data to be displayed, which is stored in the separate display buffer (MA).

3. Data-processing system (CK, D1, H) according to Claim 1 or 2, the data to be displayed being stored in the display buffer (MA) in a format that allows the control electronics (AE) to control the display (A) directly.

4. Data-processing system (CK, D1, H) according to one of the preceding claims, the card-shaped medium (CK) also having an internal power supply (SO), which can be used to supply electrical power (E3, E4) separately to the separate display buffer (MA) in the electronic memory (M), the control electronics (AE), and the display (A).

5. Data-processing system (CK, D1, H) according to Claim 4, the internal power supply (SO) of the card-shaped medium (CK) having at least one solar cell.

6. Data-processing system (CK, D1, H) according to one of the preceding claims, with an external electronic circuit (H) which can be connected to the electronic circuit (SK) of the card-shaped medium (CK) via an electronic interface (K) for transmitting data and power (D1, D2, E1, E2).

7. Data-processing system (CK, D1, H) according to Claim 6, the external electronic circuit (H) having an external data-processing unit (PX) for processing an external control program (DX), which can access the electronic memory (M) of the card-shaped medium (CK) via its data-processing unit (P).

8. Data-processing system (CK, D1, H) according to Claim 7, the external control program (DX) being able to store data to be displayed in the display buffer (MA) of the electronic memory (M) of the card-shaped medium (CK).

9. Data-processing system (CK, D1, H) according to one of Claims 5 to 7, the electronic interface (K) having a contactless transmission link (D1).

10. Data-processing system (CK, D1, H) according to one of Claims 6 to 9, wherein data to be displayed is automatically read by the control electronics (AE) from the display buffer (MA) of the card-shaped medium (CK) and output on the display (A), if the card-shaped medium (CK) is connected to the external electronic circuit (H) via the electronic interface (K).

11. Data-processing system (CK, D1 H) according to Claim 4 and one of Claims 5 to 10, the card-shaped medium (CK) having a switching element (T) with which data to be displayed is read and displayed by means of the control electronics (AE), if the card-shaped medium (CK) is not connected via the electronic interface (K) to the external electronic circuit (H).

## Revendications

1. Système de traitement de données (CK, D1, H) sur un support en forme de carte (CK),
a) qui comporte un circuit électronique (SK) avec une unité de traitement de données (P) et au moins une mémoire électronique (M) avec une zone de mémoire d'affichage (MA) pour la mémorisation temporaire de données prévues pour l'affichage, la zone de mémoire d'affichage faisant physiquement partie de la mémoire électronique et ne se distinguant pour son unité de traitement de données (P) que par l'adresse en mémoire, et
b) qui comporte un affichage (A) avec électronique de commande (AE), l'affichage pouvant être commandé par l'électronique de commande directement avec les données prévues pour l'affichage dans la zone d'affichage.

2. Système de traitement de données (CK, D1, H) selon la revendication 1, dans lequel l'unité de traitement de données (P) enregistre notamment des données spécifiques à l'utilisateur dans la mémoire électronique (M) dans une zone qui n'est pas la zone de mémoire d'affichage (MA) séparée servant à la mémorisation temporaire de données prévues pour l'affichage.

3. Système de traitement de données (CK, D1, H) selon la revendication 1 ou 2, dans lequel les données prévues pour l'affichage sont mémorisées dans la zone de mémoire d'affichage (MA) sous un format qui permet une commande directe de l'affichage (A) par l'électronique de commande (AE).

4. Système de traitement de données (CK, D1, H) selon l'une des revendications précédentes, dans lequel le support en forme de carte (CK) comporte en plus une alimentation interne en énergie (SO) par laquelle la zone de mémoire d'affichage (MA) séparée dans la mémoire électronique (M), l'électronique de commande (AE) et l'affichage (A) peuvent être alimentés séparément en tension électrique (E3, E4).

5. Système de traitement de données (CK, D1, H) selon la revendication 4, dans lequel l'alimentation interne en énergie (SO) du support en forme de carte (CK) comporte au moins une cellule solaire.

6. Système de traitement de données (CK, D1, H) selon l'une des revendications précédentes, comportant un circuit électronique externe (H) qui peut être relié au circuit électronique (SK) du support en forme de carte (CK) par une interface électronique (K) pour la transmission de données et d'énergie (D1, D2, E1, E2).

7. Système de traitement de données (CK, D1, H) selon la revendication 6, dans lequel le circuit électronique externe (H) comporte une unité externe de traitement de données (PX) pour le traitement d'un programme de commande externe (DX) qui peut accéder par l'intermédiaire de l'unité de traitement de données (P) du support en forme de carte (CK) à la mémoire électronique (M) de celui-ci.

8. Système de traitement de données (CK, D1, H) selon la revendication 7, dans lequel le programme de commande externe (DX) peut mémoriser des données prévues pour l'affichage dans la zone de mémoire d'affichage (MA) de la mémoire électronique (M) du support en forme de carte (CK).

9. Système de traitement de données (CK, D1, H) selon l'une des revendications 5 à 7, dans lequel l'interface électronique (K) comporte une section de transmission (D1) sans contact.

10. Système de traitement de données (CK, D1, H) selon l'une des revendications 6 à 9, dans lequel, si le support en forme de carte (CK) est relié au circuit électronique externe (H) par l'interface électronique (K), des données prévues pour l'affichage sont lues automatiquement dans la zone de mémoire d'affichage (MA) du support en forme de carte (CK) par l'électronique de commande (AE) et elles sont sorties sur l'affichage (A).

11. Système de traitement de données (CK, D1, H) selon la revendication 4 et selon l'une des revendications 5 à 10, dans lequel le support en forme de carte (CK) comporte un élément commutateur (T) par lequel, si le support en forme de carte (CK) n'est pas relié au circuit électronique externe (H) par l'interface électronique (K), des données prévues pour l'affichage sont lues au moyen de l'électronique de commande (AE) et sont affichées.
